(19) Europäisches Patentamt
European Patent Office
Office européen des brevets

(11) **EP 3 103 906 B1**

(12) **EUROPÄISCHE PATENTSCHRIFT**

(45) Veröffentlichungstag und Bekanntmachung des Hinweises auf die Patenterteilung:
**19.01.2022 Patentblatt 2022/03**

(21) Anmeldenummer: **16174895.9**

(22) Anmeldetag: **11.03.2011**

(51) Internationale Patentklassifikation (IPC):
**D04B 21/16** *(2006.01)*

(52) Gemeinsame Patentklassifikation (CPC):
**D04B 21/165; D04H 3/002; D04H 3/04; D04H 3/115;** D10B 2403/02412; D10B 2505/02

(54) **VERNÄHTE MULTIAXIALE GELEGE**

SEWED MULTIAXIAL FABRIC

STRUCTURE MULTI-AXIALE SUTUREE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.03.2010 EP 10002869**

(43) Veröffentlichungstag der Anmeldung:
**14.12.2016 Patentblatt 2016/50**

(62) Dokumentnummer(n) der früheren Anmeldung(en) nach Art. 76 EPÜ:
**11707423.7 / 2 547 816**

(73) Patentinhaber: **Toho Tenax Europe GmbH**
**42103 Wuppertal (DE)**

(72) Erfinder: **WOCKATZ, Ronny**
**40231 Düsseldorf (DE)**

(74) Vertreter: **CPW GmbH**
**Kasinostraße 19-21**
**42103 Wuppertal (DE)**

(56) Entgegenhaltungen:
WO-A1-2006/055785    WO-A2-2005/028724
DE-A1- 19 802 135    DE-U1- 9 306 255

**Beschreibung**

Die Erfindung betrifft ein multiaxiales Gelege aus mindestens zwei übereinander angeordneten Lagen von innerhalb der Lagen zueinander parallel und nebeneinander aneinander anliegend angeordneten Multifilamentverstärkungsgarnen, wobei die Verstärkungsgarne innerhalb einer Lage sowie benachbarter Lagen durch zueinander parallel verlaufende und zueinander mit einer Stichweite w beabstandete Nähfäden miteinander verbunden und gegeneinander fixiert sind, wobei die Nähfäden Maschen mit einer Stichlänge s ausbilden und wobei durch die Nähfäden die Null-Grad Richtung des Geleges definiert wird und wobei die Verstärkungsgarne der Lagen in Bezug auf die Null-Grad Richtung des Geleges symmetrisch angeordnet sind und, bezogen auf ihre Erstreckungsrichtung, einen Winkel α zur Null-Grad-Richtung ausbilden.

Multiaxiale Gelege oder Multiaxialgelege sind seit langem auf dem Markt bekannt. Unter Multiaxialgelegen werden Aufbauten aus mehreren übereinander angeordneten Fadenlagen verstanden, wobei die Fadenlagen aus Scharen von zueinander parallel angeordneten Verstärkungsfäden bestehen. Die übereinander angeordneten Fadenlagen können über eine Vielzahl von nebeneinander angeordneten und parallel zueinander verlaufenden und Maschen ausbildenden Näh- oder Wirkfäden miteinander verbunden und gegeneinander fixiert werden, so dass das multiaxiale Gelege auf diese Weise stabilisiert wird. Die Näh- oder Wirkfäden bilden dabei die Null-Grad Richtung des Multiaxialgeleges aus.

Die Fadenlagen sind so übereinander gelegt, dass die Verstärkungsfasern der Lagen zueinander parallel oder wechselweise kreuzend ausgerichtet sind. Die Winkel sind nahezu beliebig einstellbar. Üblicherweise werden bei Multiaxialgelegen aber Winkel von 0°, 90°, plus oder minus 25°, plus oder minus 30°, plus oder minus 45° oder plus oder minus 60° eingestellt und der Aufbau so gewählt, dass sich gegenüber der Null-Grad Richtung ein symmetrischer Aufbau ergibt. Derartige multiaxiale Gelege lassen sich z.B. mittels üblicher Kettenwirkmaschinen oder Näh-Wirk Maschinen herstellen.

Mit Multiaxialgelegen hergestellte Faserverbund-Bauteile sind in hervorragender Weise geeignet, aus den Beanspruchungsrichtungen des Bauteils eingeleiteten Kräften direkt entgegenzuwirken und somit für hohe Festigkeiten zu sorgen. Dabei ermöglicht die Anpassung in den Multiaxialgelegen hinsichtlich der Faserdichten und Faserwinkel an die im Bauteil vorliegenden Belastungsrichtungen geringe spezifische Gewichte.

Multiaxiale Gelege lassen sich aufgrund ihres Aufbaus speziell für die Fertigung von komplexen Strukturen einsetzten. Dabei werden die Multiaxialgelege ohne Matrixmaterial in eine Form gelegt und z.B. zum Umformen unter erhöhter Temperatur an deren Kontur angepasst. Nach Abkühlung wird eine stabile sogenannte Preform erhalten, in die anschließend das zur Herstellung des Verbundbauteils erforderliche Matrixmaterial über Infusion oder Injektion, auch unter Anwendung von Vakuum eingebracht wird. Bekannte Verfahren sind hier das sogenannte Liquid Molding (LM-Verfahren) oder damit verwandte Verfahren wie z.B. Resin Transfer Molding (RTM), Vacuum Assisted Resin Transfer Molding (VARTM), Resin Film Infusion (RFI), Liquid Resin Infusion (LRI) oder Resin Infusion Flexible Tooling (RIFT).

Für die Preform ist es auf der einen Seite wichtig, dass die Fasern innerhalb der Lagen sowie die einzelnen Faserlagen in ausreichendem Maße gegeneinander fixiert sind. Andererseits ist im Hinblick auf die erforderliche dreidimensionale Verformung ein gutes Drapiervermögen der multiaxialen Gelege erforderlich. Schließlich ist auch wichtig, dass die zur Preform umgeformten Multiaxialgelege gut vom Matrixharz durchdrungen werden können, das über die oben aufgeführten Verfahren eingebracht wird.

Multiaxiale Gelege und deren Herstellung werden beispielsweise in der DE 102 52 671 C1, der DE 199 13 647 B4, der DE 20 2004 007 601 U1, der EP 0 361 796 A1 oder der US 6 890 476 B3 beschrieben. Gemäß der DE 10 2005 033 107 B3 werden zunächst einzelne Matten aus unidirektional angeordneten Fasern oder Faserbündeln hergestellt, indem diese durch Bindefäden in Maschen gefasst werden und alle Bindefäden nur einen Faden bzw. nur ein Fadenbündel umschließen und fixieren. In einem zweiten Schritt werden mehrere Lagen der so hergestellten Matten in unterschiedlichen Winkeln zueinander übereinandergelegt und miteinander verbunden.

Die EP 1 352 118 A1 offenbart multiaxiale Gelege, bei denen die Lagen der Verstärkungsfasern mittels schmelzbarer Nähgarne zusammengehalten werden. Die Verwendung schmelzbarer Garne erlaubt gemäß einer der Ausführungsformen der EP 1 352 118 A1 bei der Verformung der multiaxialen Gelege oberhalb der Schmelztemperatur der Nähfäden eine Verschiebung der Lagen gegeneinander und bei anschließender Abkühlung unter die Schmelztemperatur eine Stabilisierung der Form, so dass die Nähstiche als in-situ Bindemittel fungieren. Eine Spannung in den Nähgarnen führt gemäß den Erläuterungen der EP 1 352 118 A1 zunächst zur Ausbildung von Kanalzonen im Gelege, resultierend in einer besseren Infiltrierung von Matrixharz. Erwärmung des Gelegeaufbaus über die Schmelztemperatur der Nähgarne resultiert dann in einem Spannungsabbau bei den Nähgarnen und als Folge davon zu einer Reduzierung der Welligkeit der Verstärkungsfasern. Der Anteil an Nähfäden im Gelege soll gemäß der EP 1 352 118 A1 vorzugsweise im Bereich von 0,5 - 10 Gew.-% liegen.

Häufig werden Nähfäden aus thermoplastischen Polymeren wie z.B. Polyamid oder Polyester eingesetzt, wie beispielsweise in der EP 1 057 605 B1 offenbart. Nach den Angaben der US 6 890 476 B1 weisen die dort eingesetzten Fäden eine Feinheit von ungefähr 70 dtex auf. Die WO 98/10128 offenbart multiaxiale Gelege aus mehreren übereinander unter einem Winkel abgelegten Lagen von Verstärkungsfasern, die miteinander über Nähfäden vernäht oder verwirkt sind. Die WO 98/10128 offenbart Multiaxialgelege, bei denen die Maschenketten der Nähfäden eine Teilung von beispielsweise 5 Reihen pro 25,4 mm Breite (= 1 inch) und eine Stichweite üblicherweise im Bereich von ca. 3,2 bis ca. 6,4 mm (1/8 -1/4 inch) haben. Die dabei eingesetzten Nähfäden haben eine Feinheit von mindestens ca. 80 dtex. Auch in der US 4 857 379 B1 werden Garne beispielsweise aus Polyester zur Verbindung von Verstärkungsgarnen mittels z.B. Wirk- oder Webprozessen eingesetzt, wobei die dortigen Garne eine Feinheit von 50 bis 3300 dtex haben.

Die DE 198 02 135 betrifft Multiaxialgelege für z.B. ballistische Anwendungen, bei denen übereinander angeordnete Lagen von jeweils zueinander parallel angeordneten Kett- und Schussfäden durch Bindefäden miteinander verbunden sind. Bei den in der DE 198 02 135 gezeigten Multiaxialgelegen weisen die zueinander parallelen Fäden gegeneinander einen Abstand auf, und die durch die Bindefäden ausgebildeten Maschen umschlingen jeweils die Kett- bzw. Schussfäden. Für die eingesetzten Bindefäden werden Feinheiten im Bereich zwischen 140 und 930 dtex angegeben. Auch bei den in der WO 2005/028724 offenbarten Multiaxialgelegen werden mehrere Lagen von zueinander unidirektional bzw. parallel angeordneten Verstärkungsgarnen mit hoher Festigkeit durch zwischen diese Verstärkungsgarne eingeflochtene und die einzelnen Verstärkungsgarne umschlingende Bindefäden verbunden sind. Innerhalb der Lagen sind die Verstärkungsgarne zueinander beabstandet. Als Bindefäden werden z.B. Garne aus Polyvinylalkohol mit einem Titer von 75 denier oder Elastomergarne auf Basis von Polyurethan mit einem Titer von 1120 denier eingesetzt.

Teilweise werden auch Wirrfasermatten oder -vliese oder Stapelfasergelege oder-matten zwischen die Fadenlagen aus Verstärkungsfasern gelegt, um z. B. die Durchtränkbarkeit der Gelege zu verbessern oder um z.B. die Schlagzähigkeit zu verbessern. Derartige mattenförmige Zwischenlagen aufweisende multiaxiale Gelege werden beispielsweise in der DE 35 35 272 C2, der EP 0 323 571 A1, oder der US 2008/0289743 A1 offenbart.

Im Ergebnis zeigt sich, dass heutige Multiaxialgelege durchaus eine gute Drapierbarkeit aufweisen können und dass ihre Durchtränkbarkeit mit Matrixharz zufriedenstellend sein kann. Es lässt sich auch bei den Bauteilen, die mit Multiaxialgelegen hergestellt wurden, ein gutes Kennwertniveau hinsichtlich der Biegefestigkeit oder der Zugfestigkeit erreichen. Jedoch zeigen diese Bauteile häufig ein unbefriedigendes Kennwertniveau bei Druckbeanspruchung und bei Schlagbeanspruchung.

Die Nachteile der unbefriedigenden mechanischen Festigkeiten bei Druckbeanspruchung und bei Schlagbeanspruchung sind bisher noch so gravierend, dass trotz der erwähnten besseren Eignung der Materialien speziell für komplexe Bauteile auf die bereits länger etablierte sogenannte Prepregtechnologie zurück gegriffen wird und damit ein höherer Zeit- und Fertigungsaufwand in Kauf genommen wird.

Es besteht daher ein Bedarf an multiaxialen Gelegen, die zu verbesserten Eigenschaften in Bauteilen oder Werkstoffen insbesondere bei Druck- und Schlagbeanspruchung führen.

Es ist daher Aufgabe der vorliegenden Erfindung, ein multiaxiales Gelege zur Verfügung zu stellen, mittels dessen Faserverbundbauteile mit verbesserten Eigenschaften bei Druck- und oder Schlagbeanspruchung hergestellt werden können. Die Aufgabe wird durch ein multiaxiales Gelege gemäß dem Anspruch 1 gelöst.

Es hat sich gezeigt, dass insbesondere die Stabilität gegenüber Druckbeanspruchungen deutlich verbessert wird, wenn der Titer der Nähfäden im multiaxialen Gelege im erfindungsgemäß geforderten Bereich liegt. Derartig feine Nähfäden sind bislang in multiaxialen Gelegen noch nicht eingesetzt worden. Überraschenderweise hat sich gezeigt, dass durch die Verwendung von Nähgarnen mit der erfindungsgemäß geforderten Feinheit in den multiaxialen Gelegen eine deutliche Verbesserung der Stabilität von daraus hergestellten Verbundwerkstoffen erreicht wird. Dies wird darauf zurückgeführt, dass das Fadenbild der einzelnen Fadenlagen gegenüber bekannten Multiaxialgelegen deutlich vergleichmäßigt ist. Insbesondere ist festzustellen, dass die Filamente der Verstärkungsgarne einen geradlinigeren Verlauf zeigen als dies bei Gelegen des Stands der Technik der Fall ist. Vorzugsweise haben die Nähfäden einen Titer im Bereich von 10 bis 30 dtex und besonders bevorzugt einen Titer im Bereich von 15 bis 25 dtex. Die Verwendung von niedrigtitrigen Garnen allenfalls als Wirkfäden bei der Herstellung von z.B. Gewirken für textile Anwendungen wie beispielsweise bei der Herstellung von bielastischen Fixiereinlagen für Oberbekleidung wie z.B. Sakkos bekannt. Derartige Fixiereinlagen werden z.B. in der DE 93 06 255 U1 beschrieben, bei denen allerdings die Wirkfäden die Kett- und Schussfäden des zu Grunde liegenden Geleges umschlingen. Dies trifft auch auf die Gelege der WO 2006/055785 für KFZ-Rückhaltesysteme (Air-Bags) zu, bei denen eine Lage von in Kettrichtung liegenden Garnen und eine Lage von in Schussrichtung liegenden Garnen mittels niedrigtitrigen Wirkfäden miteinander verbunden sind.

Die einzelnen aus Multifilamentverstärkungsgarnen aufgebauten Lagen der erfindungsgemäßen Gelege können mittels üblicher Methoden und Apparate hergestellt und übereinander in definierten Winkeln gegenüber der Null-Grad Richtung abgelegt werden. Bekannte Maschinen auf diesem Gebiet sind die LIBA-Maschinen oder die Karl Mayer Maschinen. Damit lassen sich auch die Verstärkungsgarne so zueinander innerhalb der Lagen positionieren, dass sie aneinander liegen, d.h. im Wesentlichen ohne Spalten nebeneinander liegen.

Es ist jedoch auch möglich, dass die Lagen des erfindungsgemäßen Multiaxialgeleges aus vorgefertigten Unidirektionalgeweben der Multifilamentverstärkungsgarne bestehen. Bei diesen Unidirektionalgeweben werden die die jeweilige Lage aufbauenden, parallel zueinander angeordneten Verstärkungsgarne durch Ketten aus lockeren Bindefäden, die sich im wesentlichen quer zu den Verstärkungsgarnen erstrecken, miteinander verbunden. Derartige Unidirektionalgewebe werden beispielsweise in der EP 0 193 479 B1 oder der EP 0 672 776 beschrieben, auf deren diesbezügliche Offenbarung hier ausdrücklich Bezug genommen wird.

Als Verstärkungsfasern bzw. Verstärkungsgarne kommen die üblicherweise im Bereich der Faserverbundtechnologie eingesetzten Fasern bzw. Garne in Betracht. Vorzugsweise handelt es sich bei den im erfindungsgemäßen Multiaxialgelege eingesetzten Multifilamentverstärkungsgarnen um Kohlenstofffaser Glasfaser- oder Aramidgarne oder um hochverstreckte UHMW Polyethylengarne. Besonders bevorzugt handelt es sich um Kohlenstofffasergarne.

Die erfindungsgemäßen Gelege sind hinsichtlich ihres Lagenaufbaus symmetrisch. Dies bedeutet, dass die Anzahl der Lagen im erfindungsgemäßen Multiaxialgelege, bei denen die Verstärkungsgarne einen positiven Winkel $\alpha$ mit der Null-Grad Richtung ausbilden, und die Anzahl der Lagen, bei denen die Verstärkungsgarne einen dazu komplementären negativen Winkel $\alpha$ mit der Null-Grad Richtung ausbilden, gleich ist. So kann das erfindungsgemäße Multiaxialgelege beispielsweise einen Aufbau mit einer +45°, einer -45°, einer +45° und einer -45 Lage aufweisen. Üblicherweise sind bei Multiaxialgelegen Winkel $\alpha$ im Bereich von $\pm$ 20° bis ca. $\pm$ 80° zu finden. Typische Winkel $\alpha$ sind $\pm$ 25°, $\pm$ 30°, $\pm$ 45° und $\pm$ 60°. In einer bevorzugten Ausführungsform des erfindungsgemäßen Geleges liegt der Betrag des Winkels $\alpha$ zur Null-Grad-Richtung im Bereich von 15° bis 75°.

Um z.B. auch weitere Beanspruchungsrichtungen im späteren Bauteil Rechnung zu tragen, umfasst das erfindungsgemäße Multiaxialgelege vorzugsweise auch Lagen von Multifilamentverstärkungsgarnen, bei denen die Verstärkungsgarne gegenüber der Null-Grad Richtung einen Winkel von 0° und/oder Lagen, bei denen die Verstärkungsgarne gegenüber der Null-Grad Richtung einen Winkel von 90° ausbilden. Diese 0° bzw. 90° Lagen befinden sich vorzugsweise zwischen den unter dem Winkel $\alpha$ orientierten Lagen. Es ist jedoch auch beispielsweise ein Aufbau mit folgenden Richtungen möglich: 90°, +30°, -30°, 0° -30°, +30°, 90°, d.h. ein Aufbau, bei dem die äußeren Lagen aus 90° Lagen gebildet sind.

Im Hinblick auf die Festigkeit gegenüber Druckbeanspruchungen und/oder Schlagbeanspruchungen von mittels der erfindungsgemäßen Multiaxialgelege hergestellten Verbundwerkstoffbauteile wurde überraschenderweise festgestellt, dass ein besonders gutes Festigkeitsniveau erreicht wird, wenn die Stichlänge s der Nähfäden in Abhängigkeit von der Stichweite w sowie vom Winkel $\alpha$ der Verstärkungsgarne im erfindungsgemäßen multiaxialen Gelege den folgenden Beziehungen (I) und (II) genügt:

$$2 \text{ mm} \leq s \leq 4 \text{ mm} \qquad\qquad\qquad (I)$$

und

$$s = n \cdot B \cdot \frac{w \cdot |\tan \alpha_1|}{2{,}3}, \qquad\qquad\qquad (II)$$

Dabei kann der Multiplikator B Werte im Bereich $0{,}9 \leq B \leq 1{,}1$ und n die Werte 0,5, 1, 1,5, 2, 3 oder 4 annehmen kann, womit auch für kleine Werte von $w \cdot |\tan \alpha_1|/2{,}3$ die Stichlänge s in dem gemäß Gleichung (I) geforderten Bereich liegt. Die Stichweite w, d.h. der Abstand zwischen den Nähfäden ist dabei in mm anzugeben.

Unter dem Winkel $\alpha_1$ wird dabei der Winkel zur Null-Grad-Richtung verstanden, unter dem die Verstärkungsgarne der bei Draufsicht auf das Multiaxialgelege der ersten Lage angeordnet sind, deren Verstärkungsgarne zur Null-Grad-Richtung einen von 90° und 0° verschiedenen Winkel aufweisen. Im Falle, dass die Verstärkungsgarne der obersten Lage oder obersten Lagen des Multiaxialgeleges einen Winkel von 90° oder von 0° zur Null-Grad-Richtung aufweisen, ist dann die erste unter dieser Lage bzw. unter diesen Lagen angeordnete Lage in Betracht zu ziehen, deren Verstärkungsgarne einen von 90° oder 0° abweichenden Winkel aufweisen.

Es wurde bei Untersuchung des Faserbildes, d.h. des Verlaufs der Fasern bzw. der Filamente der Multifilamentverstärkungsgarne in den Lagen des Multiaxialgeleges festgestellt, dass bei Einhaltung der Bedingungen (I) und (II) ein sehr gleichmäßiger Verlauf der Fasern resultiert mit einer deutlich reduzierten Welligkeit der Garne und einem deutlich verminderten Auftreten von Spalten zwischen Garnbündeln. Hierzu ist offenbar ausschlaggebend, dass entlang des Verlaufs eines Garnbündels oder Faserstrangs die Nähfäden den Faserstrang an möglichst unterschiedlichen Positionen über der Breite des Faserstrangs durchstechen. Bei den üblicherweise eingestellten Werten hinsichtlich Stichlänge und Stichweite außerhalb der durch die Bedingungen (I) und (II) definierten Bereiche ist zu beobachten, dass die Einstiche der Nähfäden entlang der Erstreckung der Verstärkungsgarne im wesentlichen zwischen denselben Fasern bzw. Filamenten bzw. denselben Bereichen des Faserstrangs bzw. des Verstärkungsgarns auftreten. Hierdurch kommt es zu ausgeprägter Welligkeit im Garnverlauf und zur Ausbildung von Spalten zwischen Filamenten.

Insgesamt wurde festgestellt, dass bei Verwendung der erfindungsgemäßen niedrigtitrigen Nähfäden und bei Einhalten der obengenannten Bedingungen (I) und (II) in der Draufsicht auf die Lagen der Verstärkungsgarne die durch die Einstichstellen der Nähfäden im Gelege hervorgerufene Faserablenkung, auch als Ondulationswinkel bezeichnet, um bis zu ca. 25% reduziert werden kann. Gleichzeitig können die entstehende Ondulationsflächen, d.h. die Flächen bzw. die Bereiche, in dem die Filamente oder Fäden eine Ablenkung zeigen, um ca. 40 % verkleinert und die Freiräume zwischen Fasern, resultierend in Bereichen mit erhöhtem Harzanteil und verringerter Festigkeit im Bauteil, damit deutlich verringert werden.

Gleichzeitig konnte anhand von Schliffbildern von Verbundlaminaten auf Basis der erfindungsgemäßen Multiaxialgelege festgestellt werden, dass durch die Verwendung der erfindungsgemäßen niedrigtitrigen Nähfäden überraschenderweise eine deutliche Vergleichmäßigung des Verlauf der Verstärkungsfäden in einer Betrachtungsrichtung parallel zur Erstreckung der Lagen der Verstärkungsgarne und senkrecht zur Erstreckung der Verstärkungsgarne erzielt wurde. So wurde bei Verwendung eines Nähfadens mit einem Titer von 23 dtex ein im wesentlichen linearer Verlauf der Filamente der Verstärkungsgarne erhalten. Bei Verwendung eines Nähfadens mit einem Titer außerhalb des erfindungsgemäß geforderten Bereichs zeigten bereits bei einem Titer von 48 dtex über den genannten Querschnitt des Verbundlaminats gesehen alle Filamente einen sehr unruhigen, wellenförmigen Verlauf mit Schwankungsamplituden in der Größenordnung der Dicke einer Lage von Verstärkungsfäden.

Dabei kann die Stichlänge im Bereich von 2 mm bis 4 mm liegen. Bei Stichlängen oberhalb von 4 mm ist eine hinreichende Stabilität des erfindungsgemäßen Multiaxialgeleges nicht mehr gewährleistet. Unterhalb von 2 mm hingegen kommt es zu einer zu hohen Anzahl von Fehlstellen im Gelege. Darüber hinaus nimmt auch die Wirtschaftlichkeit der Herstellung der Multiaxialgelege in starkem Maße ab.

Als Nähfäden kommen die üblicherweise zur Herstellung von Garngelegen eingesetzten Garne in Betracht, solange sie die erfindungsgemäß geforderte Feinheit aufweisen. Vorzugsweise sind die Nähfäden Multifilamentgarne. Bevorzugt bestehen die Nähfäden aus Polyamid, Polyaramid, Polyester, Polyacryl, Polyhydroxyether oder aus Copolymeren dieser Polymere. Besonders bevorzugt sind die Nähfäden Multifilamentgarne aus Polyester, Polyamid oder Polyhydroxyether oder aus Copolymeren dieser Polymere. Dabei können solche Nähgarne eingesetzt werden, die bei der späteren Harzinjektion z.B. oberhalb der Harzinjektionstemperatur, jedoch unterhalb der Aushärtetemperatur des eingesetzten Harzes schmelzen. Die Garne können auch bei der Härtetemperatur selbst aufschmelzbar sein. Die Nähgarne können auch solche sein, die im Matrixharz z.B. während der Injektion oder auch während dessen Aushärtung auflösbar sind. Derartige Nähfäden werden z.B. in der DE 199 25 588, der EP 1 057 605 oder der US 6 890 476 beschrieben, auf deren diesbezügliche Offenbarung ausdrücklich Bezug genommen wird.

Es ist von Vorteil, wenn die Nähfäden bei Raumtemperatur eine Bruchdehnung von ≥ 50 % aufweisen. Durch die hohe Bruchdehnung lässt sich eine verbesserte Drapierfähigkeit der erfindungsgemäßen Multiaxialgelege erreichen, wodurch auch komplexere Strukturen bzw. Bauteile realisiert werden können. Im Rahmen der vorliegenden Erfindung werden dabei als Nähfäden auch solche Fäden verstanden, die nicht über Nähen in das erfindungsgemäße Multiaxialgelege eingebracht sind, sondern über andere maschenbildende textile Prozesse wie insbesondere über Wirkprozesse. Die Maschen, über die die Nähfäden die Lagen des multiaxialen Geleges miteinander verbinden, können die bei Multiaxialgelegen üblichen Bindungstypen aufweisen wie z.B. Trikotbindung oder Fransenbindung. Bevorzugt ist eine Fransenbindung.

Bei dem erfindungsgemäßen multiaxialen Gelege ist auf und/oder zwischen den mindestens zwei Lagen der Verstärkungsgarne, d.h. den Verstärkungslagen, ein Vlies angeordnet und mit den Lagen der Verstärkungsgarne durch die Nähfäden verbunden. Bei dem Vlies kann es sich um ein textiles Flächengebilde aus ungerichteten Kurzschnittfasern oder Stapelfasern handeln oder um ein Wirrlagen-Vlies aus Endlosfilamenten, das verfestigt werden muss, z.B. unter Temperaturbeaufschlagung und unter Druck, wobei die Filamente an den Kontaktpunkten verschmelzen und so das Vlies ausbilden. Ein Vorteil der Verwendung eines Vlieses zwischen den Verstärkungslagen liegt u.a. in einer besseren Drapierbarkeit und/oder einer besseren Infiltrierbarkeit des Multiaxialgeleges mit Matrixharz. Dabei kann es sich bei dem Vlies beispielsweise um ein Glasvlies oder ein Vlies aus Kohlenstofffasern handeln.

Vorzugsweise besteht das Vlies aus einem thermoplastischen Polymermaterial. Derartige Vliese werden, wie bereits ausgeführt wurde, beispielsweise in der DE 35 35 272 C2, der EP 0 323 571 A1, der US 2007/0202762 A1 oder der US 2008/0289743 A1 offenbart. Bei geeigneter Auswahl des thermoplastischen Polymermaterials kann das Vlies als Agens zur Erhöhung der Schlagzähigkeit wirken und weitere, die Schlagzähigkeit erhöhende Mittel brauchen dann dem Matrixmaterial selbst nicht mehr zugefügt zu werden. Das Vlies sollte dabei während der Infiltration des Multiaxialgeleges mit Matrixmaterial noch hinreichende Stabilität aufweisen, bei anschließenden Press und/oder Härtungstemperaturen jedoch schmelzen. Vorzugsweise besitzt daher das das Vlies aufbauende thermoplastische Polymermaterial eine Schmelztemperatur, die im Bereich von 80 bis 250°C liegt. Bei Anwendungen, bei denen Epoxidharze als Matrixmaterialien eingesetzt werden, haben sich Vliese aus Polyamid bewährt.

Dabei ist es von Vorteil, wenn das Vlies zwei thermoplastische Polymerkomponenten umfasst, die unterschiedliche Schmelztemperaturen aufweisen, d.h. eine erste Polymerkomponente mit niedrigerer Schmelztemperatur und eine zweite Polymerkomponente mit höherer Schmelztemperatur. Dabei kann das Vlies aus einer Mischung von Monokomponentenfasern mit unterschiedlichen Schmelztemperaturen bestehen, also ein Hybridvlies sein. Das Vlies kann jedoch auch aus Bikomponentenfasern bestehen, beispielsweise aus Kern-Mantel Fasern, wobei der Kern der Faser aus einem höher schmelzenden Polymer und der Mantel aus einem niedriger schmelzenden Polymer aufgebaut ist. Bei der Verarbeitung der erfindungsgemäßen Multiaxialgelege mit solchen Hybridvliesen oder Bikomponentenvliesen zu Preformen, d.h. bei der Verformung der Multiaxialgelege kann bei einer geeigneten Wärmebeaufschlagung während der Verformung bei Temperaturen oberhalb des Schmelzpunktes der niedrig schmelzenden Vlieskomponente aber unterhalb des Schmelzpunktes der höher schmelzenden Vlieskomponente eine gute Verformbarkeit und nach Abkühlung eine gute Stabilisierung und Fixierung des verformten Geleges erzielt werden. Ähnlich einem Vlies aus Bikomponentenfasern kann das Vlies auch z.B. aus einer Wirrlage von Fasern aus der zweiten Polymerkomponente aufgebaut sein, wobei die erste Polymerkomponente z.B. durch Besprühen oder durch Beschichten auf die Fasern der zweiten Polymerkomponente aufgetragen wurde. Die Beschichtung kann beispielsweise über eine Imprägnierung mit einer Dispersion oder Lösung der ersten Polymerkomponente erfolgen, wobei nach der Imprägnierung der Flüssigkeitsanteil der Dispersion bzw. das Lösemittel entfernt wurde. Ebenso ist es möglich, dass ein aus Fasern der zweiten Polymerkomponente aufgebautes Vlies die erste Polymerkomponente in Gestalt feiner, zwischen die Fasern der zweiten Polymerkomponente eingelagerter Partikel enthält.

In einer bevorzugten Ausführungsform des erfindungsgemäßen Multiaxialgeleges weist die das Vlies aufbauende erste Polymerkomponente mit höherer Schmelztemperatur eine Schmelztemperatur im Bereich zwischen 140 und 250°C auf. Ebenso ist bevorzugt, wenn die zweite Polymerkomponente mit niedrigerer Schmelztemperatur eine Schmelztemperatur im Bereich zwischen 80 und 135°C aufweist.

In einer weiteren bevorzugten Ausführungsform ist das Vlies aus einem Polymermaterial aufgebaut, das zumindest teilweise im Matrixmaterial löslich ist. Besonders bevorzugt ist das Polymermaterial in Epoxidharzen, Cyanatesterharzen oder Benzoxazinharzen löslich. Derartige Vliese werden beispielsweise in der US 2006/0252334 oder der EP 1 705 269 beschrieben. Ganz besonders bevorzugt ist ein Vlies aus Polyhydroxyether, da es sich im Matrixharz löst und mit dem Matrixharz bei dessen Aushärtung zu einer homogenen Matrix vernetzt.

In einer ebenso bevorzugten Ausführungsform ist das Vlies aus einer ersten thermoplastischen Polymerkomponente mit höherer Schmelztemperatur und einer zweiten thermoplastischen Polymerkomponente mit niedrigerer Schmelztemperatur aufgebaut, und die zweite Polymerkomponente ist zumindest teilweise im Matrixmaterial löslich. Besonders bevorzugt ist die niedriger schmelzende zweite Polymerkomponente in Epoxidharzen löslich. Vorzugsweise handelt es sich bei diesem Vlies um ein Hybridvlies, d.h. um ein Vlies aus einer Mischung von Monokomponentenfasern mit unterschiedlichen Schmelztemperaturen. Vorzugsweise hat dabei die erste Polymerkomponente mit höherer Schmelztemperatur eine Schmelztemperatur im Bereich zwischen 140 und 250°C. Bei solchen Temperaturen schmilzt der Teil des Vlieses, der aus der ersten Polymerkomponente besteht, erst oberhalb der Temperaturen, die in der Regel bei der Injektion des Matrixharzes vorherrschen. Da somit die erste Polymerkomponente bei der Harzinjektionstemperatur noch nicht schmilzt, ist eine gute Formkonstanz des Multiaxialgeleges in diesem Stadium gewährleistet.

Besonders bevorzugt ist die erste Polymerkomponente ein Polyamidhomopolymer oder Polyamidcopolymer oder eine Mischung aus Polyamidhomopolymeren und/oder Polyamidcopolymeren. Insbesondere ist das Polyamid-Homopolymer oder -Copolymer ein Polyamid 6, Polyamid 6.6, Polyamid 6.12, Polyamid 4.6, Polyamid 11, Polyamid 12 oder ein Copolymer auf Basis Polyamid 6/12.

Ebenso ist bevorzugt, wenn die zweite Polymerkomponente in diesem Vlies eine Schmelztemperatur im Bereich zwischen 80 und 135°C aufweist. Gleichzeitig soll sie jedoch, wie ausgeführt wurde, im Matrixmaterial löslich sein. Daher handelt es sich bei der zweiten Polymerkomponente besonders bevorzugt um ein Polyhydroxyether, welches sich insbesondere in Epoxidharzen, Cyanatesterharzen oder Benzoxazinharzen bereits während der Infiltrierung des erfindungsgemäßen Multiaxialgeleges mit diesen Matrixharzen, d.h. z.B. während des Harz-Infusionsprozesses, vollständig im Harzsystem löst und dann zusammen mit dem Matrixharz das Matrixharzsystem ausbildet. Die erste Polymerkomponente löst sich hingegen nicht im Matrixsystem und bleibt sowohl während als auch nach dem Harz-Infusionsprozess und auch nach der Aushärtung des Matrixsystems als eigene Phase bestehen.

Dabei ist es im Hinblick auf die Eigenschaften der mit den erfindungsgemäßen Multiaxialgelegen hergestellten Verbundbauteile, insbesondere im Hinblick auf deren Schlagzähigkeit und auf deren Matrixgehalte von Vorteil, wenn das Vlies die erste Polymerkomponente in einem Anteil von 20 bis 40 Gew.-% und die zweite Polymerkomponente in einem Anteil von 60 bis 80 Gew.-% enthält. Insgesamt ist es bevorzugt, wenn das im erfindungsgemäßen multiaxialen Gelege vorliegende Vlies ein Flächengewicht im Bereich von 5 bis 25 g/m$^2$ und besonders bevorzugt ein Flächengewicht im Bereich von 6 bis 20 g/m$^2$ aufweist.

Die erfindungsgemäßen multiaxialen Gelege zeichnen sich durch eine gute Drapierfähigkeit und durch eine gute Harzdurchlässigkeit aus. Darüber hinaus ermöglichen sie die Herstellung von Bauteilen mit hoher Stabilität gegenüber Druckbeanspruchungen und hoher Toleranz gegenüber Schlagbeanspruchungen. Sie sind daher in besonderer Weise zur Herstellung von sogenannten Preformen geeignet, aus denen komplexere Faserverbundbauteile hergestellt werden. Daher betrifft die vorliegende Erfindung insbesondere auch Preformen zur Herstellung von Faserverbundbauteilen, die die erfindungsgemäßen multiaxialen Gelege enthalten. Die Erfindung wird anhand der nachfolgenden Figuren und Beispiele näher erläutert, wobei der Umfang der Erfindung durch die Beispiele nicht eingeschränkt wird.

Es zeigen:

Fig. 1:   Aufnahme eines Segments eines vernähten multiaxialen Geleges in der Draufsicht in vergrößerter Darstellung

Fig. 2:   Schematisierte Darstellung des in Fig.1 gezeigten Segments eines vernähten multiaxialen Geleges in der Draufsicht (in Negativdarstellung)

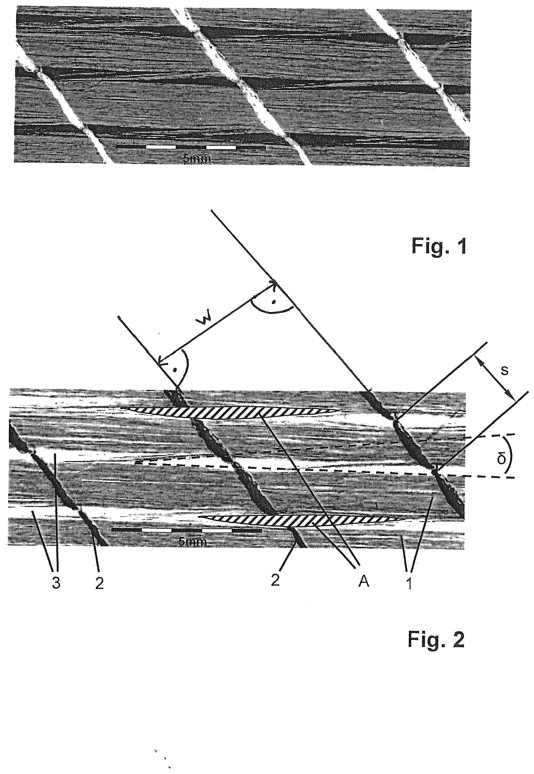

Figur 1 und Figur 2 zeigen eine Aufnahme eines Segments eines multiaxialen Geleges in der Draufsicht, bei der die oberste Lage des Multiaxialgeleges zu sehen ist. Dabei stellt die Figur 2 das in Figur 1 gezeigte Segment wegen der besseren Darstellbarkeit als Negativ dar, d.h. in Figur 1 weiß erscheinende Bereiche erscheinen in Figur 2 schwarz und schwarze Bereiche in Figur 1 erscheinen weiß in Figur 2. Von der obersten Lage sind in die in den Figuren von links nach rechts verlaufenden, nebeneinander parallel angeordneten und aneinanderliegenden Kohlenstofffaserfilamentgarne 1 zu erkennen, die durch Nähfäden 2 miteinander und mit der in den Figuren nicht erkennbaren darunter liegenden Lage verbunden sind. In den Figuren 1 und 2 ist das dargestellte Segment des Multiaxialgeleges um 45° in der Ebene gedreht, so dass die Nähfäden nicht in 0° Richtung, sondern unter einem Winkel von 45° verlaufen. Hierdurch verlaufen die gegenüber den Nähfäden unter einem Winkel $\alpha_1$ von 45° angeordneten Kohlenstofffasergarne in den Figuren 1 und 2 von links nach rechts. Durch die Maschenbildung (Fransenbindung) durchstoßen die Nähfäden 2 die Kohlenstofffaserfilamentgarne 1 in einem definierten Abstand, der der Stichlänge s entspricht, wobei die Nähfäden 2 zueinander einen Abstand w, als Stichweite bezeichnet, aufweisen.

Infolge der Durchtritte der Nähfäden 2 durch die jeweilige Lage des Multiaxialgeleges entstehen Spalte 3 zwischen den Filamenten der Kohlenstofffasergarne 1, und es kommt zu einer Faserablenkung, aus der sich ein Öffnungswinkel $\delta$ ermitteln lässt. Durch die Faserablenkung zwischen den Filamenten der Kohlenstofffasergarne entstehen Freiräume zwischen den Filamenten, deren zweidimensionale Erstreckung in der Betrachtungsebene im Rahmen der vorliegenden Erfindung als Ondulationsfläche A bezeichnet wird. In diesen Freiräumen kommt es im späteren Bauteil zu erhöhtem Harzanteil und verringerter Festigkeit des Bauteils.

Beispiele 1 und 2:

Es wurde ein multiaxiales Gelege auf Basis von Kohlenstofffasern auf einer Multiaxial-Anlage (Typ "Cut&Lay" Carbon, Fa. Karl Mayer Textilmaschinenfabrik GmbH) hergestellt. Hierzu wurden zunächst Einzellagen mit einem Flächengewicht von 134 g/m$^2$ aus parallel nebeneinander abgelegten und sich berührenden Kohlenstofffasergarnen (Tenax®-E IMS65 E23 24k 830tex; Fa. Toho Tenax Europe GmbH) hergestellt. Zwei dieser Einzellagen wurden so übereinander abgelegt, dass die untere Lage in Bezug auf die Produktionsrichtung des multiaxialen Geleges einen Winkel $\alpha$ von +45° und die obere Lage einen Winkel $\alpha$ von -45° aufwies. Die so übereinander angeordneten Einzellagen wurden mittels Nähfäden miteinander in Fransenbindung verwirkt. Die eingesetzten Nähfäden bestanden in Beispiel 1 aus einem Co-Polyamid und hatten eine Feinheit von 23 dtex. Im Beispiel 2 wurden Nähfäden aus Polyester mit einer Feinheit von 35 dtex eingesetzt. Die Stichlänge s betrug 2,6 mm, die Stichweite w betrug 5 mm.

Zur Beurteilung der Qualität des so hergestellten Geleges wurden mittels eines kalibrierten Auflicht-Scanners mit einer Auflösung von 720 dpi Aufnahmen der Oberfläche des Geleges angefertigt, und mittels optischer Bildauswertung unter Verwendung der Software Analysis Auto5 (Fa. Olympus) ausgewertet. Die Auswertung erfolgte hinsichtlich der durch die Durchstiche der Nähfäden hervorgerufenen Faserablenkung, gekennzeichnet durch den Öffnungswinkel $\delta$, und hinsichtlich der daraus resultierenden Ondulationsflächen A entsprechend der in Figur 2 gezeigten schematischen Darstellung. Die erhaltenen Ergebnisse sind in Tabelle 1 aufgeführt.

Vergleichsbeispiele 1 und 2:

Es wurde wie im Beispiel 1 vorgegangen. Im Vergleichsbeispiel 1 wurden jedoch Polyester-Nähgarne mit einem Titer von 48 dtex und im Vergleichsbeispiel 2 Polyester-Nähgarne mit einem Titer von 75 dtex eingesetzt. Die Ergebnisse hinsichtlich der durch die Durchstiche der Nähfäden hervorgerufenen Faserablenkung, gekennzeichnet durch den Öffnungswinkels $\delta$, und hinsichtlich der daraus resultierenden Ondulationsflächen A sind ebenfalls in Tabelle 1 aufgeführt.

Tabelle 1:

| Gelege aus: | Feinheit Nähgarn [dtex] | Stich länge [mm] | Faserablenkung Öffnungswinkel $\delta$ [°] | Ondulationsfläche A [mm$^2$] |
|---|---|---|---|---|
| Beispiel 1 | 23 | 2,6 | 5,30 | 1,10 |
| Beispiel 2 | 35 | 2,6 | 6,01 | 1,40 |
| Vergl. Beispiel 1 | 48 | 2,6 | 6,09 | 1,68 |

(fortgesetzt)

| Gelege aus: | Feinheit Nähgarn [dtex] | Stich länge [mm] | Faserablenkung Öffnungswinkel $\delta$ [°] | Ondulationsfläche A [mm$^2$] |
|---|---|---|---|---|
| Vergl. Beispiel 2 | 76 | 2,6 | 6,34 | 1,94 |

Beispiele 3 und 4:

Um den Einfluss der unterschiedlichen Nähgarnfeinheiten auf die mechanischen Eigenschaften eines Laminats zu ermitteln, wurden wie in Beispiel 1 beschrieben, Gelege (Typ 1) aus zwei in +45° und -45° orientierten Einzellagen aus parallel nebeneinander abgelegten und sich berührenden Kohlenstofffasergarnen (Tenax®-E IMS65 E23 24k 830tex; Fa. Toho Tenax Europe GmbH) mit einem Flächengewicht von 134 g/m$^2$ hergestellt. Auf gleiche Weise wurden Gelege hergestellt, deren Einzellagen in -45° und +45° orientiert waren (Typ 2). Die Einzellagen der Gelege vom Typ 1 und vom Typ 2 waren jeweils mittels Nähfäden mit einer Feinheit von 23 dtex (Beispiel 3) bzw. 35 dtex (Beispiel 4) miteinander, wie in Beispiel 1 angegeben, vernäht.

Zur Herstellung eines Laminats wurde jeweils eine Lage eines Geleges mit +45°/-45° Orientierung (Typ 1) mit einer Lage eines dazu symmetrischen Geleges mit -45°/+45° (Typ 2) durch Übereinanderlegen zu einem Stapel von vier Einzellagen kombiniert. Diese Vorgehensweise wurde wiederholt und auf diese Weise ein Stapel aus insgesamt acht dieser aus jeweils vier übereinander angeordneten Einzellagen aufgebaut wurde, so dass der Gesamtstapel insgesamt 32 Lagen umfasste. Über diese Vorgehensweise wurde ein Stapel hergestellt, dessen Lagen mittels des 23 dtex starken Nähfaden miteinander vernäht waren (Beispiel 3) und ein Stapel, dessen Lagen mittels des 35 dtex starken Nähfaden miteinander vernäht waren (Beispiel 4). Die so hergestellten Stapel wurden über ein Resin-Infusion-Verfahren zu Laminaten weiter verarbeitet. Als Harzsystem wurde das bei 180°C härtende Epoxidsystem HexFlow RTM6 der Firma Hexcel verwendet. Es wurde ein Laminat mit einer Gesamtdicke nach Infusion und Aushärtung von 4,0 mm und einem Faservolumengehalt von 60 Vol.-% hergestellt.

Das Laminat wurde um 45° gedreht, so dass die Kohlenstofffasern in 0° und 90° orientiert waren. Aus dem so vorgelegten Laminat wurden nach DIN EN 6036-II Probekörper hergestellt, deren Kanten sich in Richtung der Kohlenstofffasern im Laminat erstreckten, d.h. die Faserorientierung in den Probekörpern betrug 90°/0°). Für die so hergestellten Probekörper wurde mittels einer Prüfmaschine vom Typ Zwick Z250 nach DIN EN 6036 die Druckfestigkeit ermittelt. Die Ergebnisse sind in Tabelle 2 zusammengestellt.

Für die Laminate wurden des Weiteren Schliffbilder von Schnittflächen senkrecht zur flächigen Erstreckung der Einzellagen und parallel zur 0°-Orientierung der Kohlenstofffasern im Probekörper angefertigt. Die Schliffbilder sind in Tabelle 3 zusammengestellt. Es zeigt sich, dass sich bei Verwendung von Nähfäden mit 23 dtex und mit 35 dtex eine gute Gradlinigkeit der Kohlenstofffasern in 0°-Orien-tierung (in den Schliffbildern als helle Linien erkennbar), d.h. die Kohlenstofffasern zeigen keine oder nur eine geringe Abweichung von einer Geraden.

Vergleichsbeispiel 3:

Es wurde wie in Beispiel 3 vorgegangen. Zur Herstellung der Gelege mit +45°/-45° Orientierung (Typ 1) der dazu symmetrischen Gelege mit -45°/+45° (Typ 2) wurden im Vergleichsbeispiel 3 jedoch Nähfäden mit einem Titer von 48 dtex eingesetzt. Die Ergebnisse sind in Tabelle 2 aufgeführt.

Auch für das Laminat des Vergleichsbeispiels 3 wurde ein Schliffbild einer Schnittfläche senkrecht zur flächigen Erstreckung der Einzellagen und parallel zur 0°-Orientierung der Kohlenstofffasern angefertigt. Das Schliffbild des Vergleichsbeispiels 3 ist ebenfalls der Tabelle 3 zu entnehmen. Es ergibt sich für das Laminat des Vergleichsbeispiels 3 bei Verwendung von Nähfäden mit 48 dtex ein vergleichsweise unruhiges Bild: Die Kohlenstofffasern in 0°-Orientierung (in den Schliffbildern als helle Linien erkennbar), zeigen einen ausgeprägt welligen Verlauf, d.h. zum Teil deutliche Abweichungen von einem gradlinigen Verlauf. Durch den dickeren Nähfaden kommt es zu Ondulationen der Kohlenstofffasern senkrecht zur Erstreckung der Einzellagen. Derartige Abweichungen von einem gradlinigen Verlauf der Kohlenstofffasern dürften ursächlich für eine verminderte Druckfestigkeit sein.

Tabelle 2

| Laminat aus: | Feinheit Nähgarn [dtex] | Faserflächengewicht pro Einzellage [g/m$^2$] | Druckfestigkeit [MPa] (normiert auf 60% Faservolumenanteil) |
|---|---|---|---|
| Beispiel 3 | 23 | 134 | 641,8 |

(fortgesetzt)

| Laminat aus: | Feinheit Nähgarn [dtex] | Faserflächengewicht pro Einzellage [g/m$^2$] | Druckfestigkeit [MPa] (normiert auf 60% Faservolumenanteil) |
|---|---|---|---|
| Beispiel 4 | 35 | 134 | 598,1 |
| Vergl. Beispiel 3 | 48 | 134 | 372,6 |

Tabelle 3:

| Laminat aus: | Feinheit Nähgarn [dtex] | Schliffbild senkrecht zur 0° Orientierung |
|---|---|---|
| Beispiel 3 | 23 | |
| Beispiel 4 | 35 | |
| Vergl. Beispiel 3 | 48 | |

Beispiele 5 bis 7:

Es wurde wie in Beispiel 1 bzw. Beispiel 3 vorgegangen, wobei Nähfäden einer Feinheit von 23 dtex eingesetzt wurden. Unter Beibehaltung einer Stichweite w von 5 mm wurde die Stichlänge variiert, und es wurden Stichlängen s von 3,1 mm (Beispiel 5), 2,5 mm (Beispiel 6) und 2,2 mm (Beispiel 7) eingestellt.

Es zeigt sich, dass die erhaltenen Werte für die Druckfestigkeit wegen der Verwendung des niedrig titrigen Nähfadens mit einem Titer von 23 dtex insgesamt auf hohem Niveau liegen. Allerdings weist das Laminat des Beispiels 6, bei dem bei der Herstellung der Gelege eine Stichweite von 2,5 mm eingestellt war, die niedrigste Druckfestigkeit auf. Hier ist festzustellen, dass die Stichweite von 5 mm genau dem zweifachen der Stichlänge von 2,5 mm entspricht, die Stichweite also ein ganzzahliges Vielfaches der Stichlänge ist. Dies hat bei einer Orientierung der Kohlenstofffasern unter einem Winkel von +45° oder -45° zur Folge, dass ein hohes Risiko dafür besteht, dass die Durchstiche der Nähfäden ein- und dasselbe Kohlenstofffasergarn entlang dessen Länge an stets derselben Stelle über dessen Breite auftreten. Hierdurch kann zu einem Aufspalten des Kohlenstofffasergarns über seine gesamte Länge und zu einer Reduzierung des Kraftflusses bei einer Druckbeanspruchung in Richtung der Faserorientierung kommen.

Tabelle 4:

| Gelege/ Laminat aus: | Feinheit Nähgarn [dtex] | Stich länge [mm] | Faserflächengewicht pro Einzellage [g/m$^2$] | Druckfestigkeit [MPa] (normiert auf 60% Faservolumenanteil) |
|---|---|---|---|---|
| Beispiel 5 | 23 | 3,1 | 134 | 668,5 |
| Beispiel 6 | 23 | 2,5 | 134 | 610,8 |

(fortgesetzt)

| Gelege/ Laminat aus: | Feinheit Nähgarn [dtex] | Stich länge [mm] | Faserflächengewicht pro Einzellage [g/m²] | Druckfestigkeit [MPa] (normiert auf 60% Faservolumenanteil) |
|---|---|---|---|---|
| Beispiel 7 | 23 | 2,2 | 134 | 676,6 |

**Patentansprüche**

1. Multiaxiales Gelege aus mindestens zwei übereinander angeordneten Lagen von innerhalb der Lagen zueinander parallel und nebeneinander aneinander anliegend angeordneten Multifilamentverstärkungsgarnen (1), wobei die Verstärkungsgarne (1) innerhalb einer Lage sowie benachbarter Lagen durch zueinander parallel verlaufende und zueinander mit einer Stichweite w beabstandete Nähfäden (2) miteinander verbunden und gegeneinander fixiert sind wobei die Nähfäden (2) Maschen mit einer Stichlänge s ausbilden und durch die Nähfäden (2) die Null-Grad Richtung des Geleges definiert wird und wobei die Verstärkungsgarne (1) der Lagen in Bezug auf die Null-Grad Richtung des Geleges symmetrisch angeordnet sind und, bezogen auf ihre Erstreckungsrichtung, einen Winkel $\alpha$ zur Null-Grad-Richtung ausbilden, der ungleich 90° und ungleich 0° ist, und wobei auf und/oder zwischen den mindestens zwei Lagen ein Vlies angeordnet ist, **dadurch gekennzeichnet, dass** die Nähfäden (2) einen Titer im Bereich von 10 bis 35 dtex aufweisen.

2. Multiaxiales Gelege nach Anspruch 1, **dadurch gekennzeichnet, dass** der Betrag des Winkels $\alpha$ zur Null-Grad-Richtung im Bereich von 15° bis 75° liegt.

3. Multiaxiales Gelege nach Anspruch 1 oder 2, **dadurch gekennzeichnet, dass** das Gelege des Weiteren Lagen von Multifilamentverstärkungsgarnen (1) umfasst, bei denen die Verstärkungsgarne (1) gegenüber der Null-Grad Richtung einen Winkel von 0° und/oder Lagen, bei denen die Verstärkungsgarne (1) gegenüber der Null-Grad Richtung einen Winkel von 90° ausbilden.

4. Multiaxiales Gelege nach einem oder mehreren der Ansprüche 1 bis 3, **dadurch gekennzeichnet, dass** die Stichlänge s der Nähfäden (2) in Abhängigkeit von der Stichweite w sowie vom Winkel $\alpha_1$ der Verstärkungsgarne (1) den Beziehungen (I) und (II) genügt:

$$2\ \text{mm} \leq s \leq 4\ \text{mm} \qquad\qquad (I)$$

und

$$s = n \cdot B \cdot \frac{w \cdot |\tan \alpha_1|}{2,3}, \qquad\qquad (II)$$

mit

w = Stichweite [mm],
$0,9 \leq B \leq 1,1$ und
n = 0,5; 1; 1,5; 2; 3 oder 4,
und wobei unter dem Winkel $\alpha_1$ derjenige Winkel $\alpha$ zur Null-Grad-Richtung verstanden wird, unter dem die Verstärkungsgarne (1) der bei Draufsicht auf das
Multiaxialgelege ersten Lage angeordnet sind, deren Verstärkungsgarne (1) zur
Null-Grad-Richtung einen von 90° und 0° verschiedenen Winkel aufweisen.

5. Multiaxiales Gelege nach einem oder mehreren der Ansprüche 1 bis 4, **dadurch gekennzeichnet, dass** die Nähfäden (2) bei Raumtemperatur eine Bruchdehnung von $\geq$ 50 % aufweisen.

6. Multiaxiales Gelege nach einem oder mehreren der Ansprüche 1 bis 5, **dadurch gekennzeichnet, dass** die Nähfäden (2) einen Titer im Bereich von 10 bis 30 dtex aufweisen.

7. Multiaxiales Gelege nach einem oder mehreren der Ansprüche 1 bis 6, **dadurch gekennzeichnet, dass** die Nähfäden (2) Multifilamentgarne aus Polyester, Polyamid oder Polyhydroxyether oder aus Copolymeren dieser Polymere sind.

8. Multiaxiales Gelege nach einem oder mehreren der Ansprüche 1 bis 7, **dadurch gekennzeichnet, dass** die Multifilamentverstärkungsgarne (1) Kohlenstofffaser-Glasfaser- oder Aramidgarne oder hochverstreckte UHMW-Polyethylengarne sind.

9. Multiaxiales Gelege nach einem oder mehreren der Ansprüche 1 bis 8, **dadurch gekennzeichnet, dass** das Vlies ein Flächengewicht im Bereich von 5 bis 25 g/m$^2$ aufweist.

10. Multiaxiales Gelege nach einem oder mehreren der Ansprüche 1 bis 9, **dadurch gekennzeichnet, dass** das Vlies aus thermoplastischen Polymerkomponenten mit unterschiedlichen Schmelztemperaturen besteht.

11. Multiaxiales Gelege nach Anspruch 10, **dadurch gekennzeichnet, dass** die Polymerkomponente mit niedrigerer Schmelztemperatur eine Schmelztemperatur im Bereich zwischen 80 und 135°C aufweist.

12. Multiaxiales Gelege nach Anspruch 10 oder 11, **dadurch gekennzeichnet, dass** die Polymerkomponente mit höherer Schmelztemperatur eine Schmelztemperatur im Bereich zwischen 140 und 250°C aufweist.

13. Multiaxiales Gelege nach Anspruch 1, **dadurch gekennzeichnet, dass** die Stichlänge s im Bereich von 2 mm bis 4mm liegt.

14. Multiaxiales Gelege nach Anspruch 1, **dadurch gekennzeichnet, dass** das Vlies ein verfestigtes Wirrlagen-Vlies aus Endlosfilamenten ist.

15. Preform zur Herstellung von Verbundwerkstoffbauteilen, **dadurch gekennzeichnet, dass** sie ein multiaxiales Gelege nach einem oder mehreren der Ansprüche 1 bis 14 umfasst.

**Claims**

1. Multiaxial non-crimp fabric made from at least two superimposed layers of multifilament reinforcing yarns (1) which are arranged alongside and parallel to another within the layers, wherein the reinforcing yarns (1) within one layer as well as adjacent layers are joined to each other and secured against one another other by sewing threads (2) running parallel to one another and separated from one another by a stitch width w, wherein the sewing threads (2) form stitches with a stitch length s, and the zero-degree direction of the non-crimp fabric is defined by the sewing threads (2), and wherein the reinforcing yarns (1) of the layers are symmetrically arranged with respect to the zero-degree direction of the non-crimp fabric and, with respect to their direction of extension, form an angle $\alpha$ to the zero-degree direction, said angle not being equal to 90° or 0°, and wherein a non-woven fabric is arranged on and/or between the at least two layers, **characterised in that** the sewing threads (2) have a linear density in the range from 10 to 35 dtex.

2. Multiaxial non-crimp fabric according to claim 1, **characterised in that** the value of the angle $\alpha$ to the zero-degree direction is in the range from 15° to 75°.

3. Multiaxial non-crimp fabric according to claim 1 or 2, **characterised in that** the non-crimp fabric further comprises layers of multifilament reinforcing yarns (1) in which the reinforcing yarns (1) form an angle of 0° with respect to the zero-degree direction and/or layers in which the reinforcing yarns (1) form an angle of 90° with respect to the zero-degree direction.

4. Multiaxial non-crimp fabric according to one or more of claims 1 to 3, **characterised in that** the stitch length s of the sewing threads (2) depending on the stitch width w as well as the angle $\alpha_1$ of the reinforcing yarns (1) satisfies the relations (I) and (II):

$$2\text{ mm} \le s \le 4\text{ mm} \qquad\qquad\qquad\qquad\qquad (\text{I})$$

and

$$s = n \cdot B \cdot \frac{w \cdot |\tan\alpha_1|}{2.3}, \qquad\qquad\qquad (\text{II})$$

where

w = stitch width [mm],
$0.9 \le B \le 1.1$ and
n = 0.5; 1; 1.5; 2; 3 or 4,
and wherein the angle $\alpha_1$ is understood as the angle $\alpha$ to the zero-degree direction, when viewed from above, at which the reinforcing yarns (1) of the first layer of the multiaxial non-crimp fabric are arranged whose reinforcing yarns (1) have an angle differing from 90° and 0° to the zero-degree direction.

5. Multiaxial non-crimp fabric according to one or more of claims 1 to 4, **characterised in that** the sewing threads (2) have an elongation at break at room temperature of $\ge 50\%$.

6. Multiaxial non-crimp fabric according to one or more of claims 1 to 5, **characterised in that** the sewing threads (2) have a linear density in the range from 10 to 30 dtex.

7. Multiaxial non-crimp fabric according to one or more of claims 1 to 6, **characterised in that** the sewing threads (2) are multifilament yarns made from polyester, polyamide, or polyhydroxy ether, or copolymers of these polymers.

8. Multiaxial non-crimp fabric according to one or more of claims 1 to 7, **characterised in that** the multifilament reinforcing yarns (1) are carbon fibre, glass fibre, or aramid yarns, or high-stretch UHMW polyethylene yarns.

9. Multiaxial non-crimp fabric according to one or more of claims 1 to 8, **characterised in that** the non-woven fabric has a mass per unit area in the range from 5 to 25 $g/m^2$.

10. Multiaxial non-crimp fabric according to one or more of claims 1 to 9, **characterised in that** the non-woven fabric comprises thermoplastic polymer components with differing melting temperatures.

11. Multiaxial non-crimp fabric according to claim 10, **characterised in that** the polymer component with a lower melting temperature has a melting temperature in the range between 80° and 135°C.

12. Multiaxial non-crimp fabric according to claim 10 or 11, **characterised in that** the polymer component with a higher melting temperature has a melting temperature in the range between 140° and 250°C.

13. Multiaxial non-crimp fabric according to claim 1, **characterised in that** the stitch length s is in the range of 2 mm to 4 mm.

14. Multiaxial non-crimp fabric according to claim 1, **characterised in that** the non-woven fabric is a bonded tangled non-woven fabric of endless filaments.

15. Preform for producing composite components, **characterised in that** it comprises a multiaxial non-crimp fabric according to one or more of claims 1 to 14.

**Revendications**

1. Tissu multiaxial constitué d'au moins deux couches disposées l'une sur l'autre, de fils de renforcement du type multifilament (1) disposés parallèlement à côté les uns des autres, les uns contre les autres, les fils de renforcement (1) disposés à l'intérieur d'une couche ainsi que de couches voisines étant reliés et fixés les uns aux autres par des fils de couture (2) qui s'étendent parallèlement et qui sont espacés les uns des autres d'un écart de point w, les fils de couture (2) formant des mailles d'une longueur de point s et la direction zéro degré du tissu étant définie par les fils de couture (2) et les fils de renforcement (1) des couches étant disposés symétriquement par rapport à la direction zéro degré du tissu et formant un angle α en ce qui concerne leur direction d'étendue par rapport à la direction zéro degré, lequel angle α est différent de 90° et différent de 0°, et un voile de non-tissé étant disposé sur et/ou entre les au moins deux couches, **caractérisé en ce que** les fils de couture (2) ont un titre compris entre 10 dtex et 35 dtex.

2. Tissu multiaxial selon la revendication 1, **caractérisé en ce que** la valeur de l'angle α par rapport à la direction zéro degré se situe dans la plage comprise entre 15° et 75°.

3. Tissu multiaxial selon la revendication 1 ou 2, **caractérisé en ce que** le tissu comprend en outre des couches de fils de renforcement multifilament (1) dans lesquels les fils de renforcement (1) forment un angle de 0° par rapport à la direction zéro degré et/ou des couches dans lesquelles les fils de renforcement (1) forment un angle de 90° par rapport à la direction 0°.

4. Tissu multiaxial selon une ou plusieurs des revendications 1 à 3, **caractérisé en ce que** la longueur de point s des fils de couture (2) en fonction de l'écart de point ainsi que de l'angle $α_1$ des fils de renforcement (1) satisfait aux relations (I) et (II) :

$$2 \text{ mm} \leq s \leq 4 \text{ mm} \qquad\qquad\qquad (I)$$

et

$$s = n \cdot B \cdot \frac{w \cdot |\tan α_1|}{2,3}, \qquad\qquad\qquad (II)$$

avec

w = écart de point [mm],
$0,9 \leq B \leq 1,1$ et
n = 0,5 ; 1 ; 1,5 ; 2 ; 3 ou 4,
et sous l'appellation angle $α_1$ il faut comprendre l'angle α par rapport à la direction zéro degré avec lequel sont disposés les fils de renforcement (1) de la première couche, observée depuis le dessus du tissu multiaxial, couche dont les fils de renforcement (1) présentent un angle différent de 90° et de 0° par rapport à la direction zéro degré.

5. Tissu multiaxial selon une ou plusieurs des revendications 1 à 4, **caractérisé en ce que** les fils de couture (2) présentent à température ambiante un allongement à la rupture $\geq$ 50 %.

6. Tissu multiaxial selon une ou plusieurs des revendications 1 à 5, **caractérisé en ce que** les fils de couture (2) ont un titre situé dans la plage comprise entre 10 dtex et 30 dtex.

7. Tissu multiaxial selon une ou plusieurs des revendications 1 à 6, **caractérisé en ce que** les fils de couture (2) sont des fils du type multifilament, de polyester, de polyamide ou d'éther polyhydroxylique, ou de copolymères de ces polymères.

8. Tissu multiaxial selon une ou plusieurs des revendications 1 à 7, **caractérisé en ce que** les fils de renforcement (1) du type multifilament sont des fils de fibres de carbone, des fils de fibres de verre ou bien des fils d'aramide ou des fils de polyéthylène UHMW fortement étirés.

9. Tissu multiaxial selon une ou plusieurs des revendications 1 à 8, **caractérisé en ce que** le voile de non-tissé a une masse surfacique qui se situe dans la plage comprise entre 5 g/m$^2$ et 25 g/m$^2$.

10. Tissu multiaxial selon une ou plusieurs des revendications 1 à 9, **caractérisé en ce que** le voile de non-tissé est constitué de composants polymères thermoplastiques dont les températures de fusion diffèrent.

**11.** Tissu multiaxial selon la revendication 10, **caractérisé en ce que** le composant polymère doté de la plus faible température de fusion a une température de fusion qui se situe dans la plage comprise entre 80 °C et 135 °C.

**12.** Tissu multiaxial selon la revendication 10 ou 11, **caractérisé en ce que** le composant polymère doté de la température de fusion la plus élevée a une température de fusion qui se situe dans la plage comprise entre 140 °C et 250 °C.

**13.** Tissu multiaxial selon la revendication 1, **caractérisé en ce que** la longueur de point s se situe dans la plage de 2 mm à 4 mm.

**14.** Tissu multiaxial selon la revendication 1, **caractérisé en ce que** le voile de non-tissé est un voile de non-tissé à couches aléatoires consolidées de filaments continus.

**15.** Préforme destinée à la fabrication de composants en matériau composite, **caractérisée en ce qu'**elle comprend un tissu multiaxial selon une ou plusieurs des revendications 1 à 14.

Fig. 1

Fig. 2

**EP 3 103 906 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10252671 C1
- DE 19913647 B4
- DE 202004007601 U1
- EP 0361796 A1
- US 6890476 B3
- DE 102005033107 B3
- EP 1352118 A1
- EP 1057605 B1
- US 6890476 B1
- WO 9810128 A
- US 4857379 B1
- DE 19802135
- WO 2005028724 A

- DE 3535272 C2
- EP 0323571 A1
- US 20080289743 A1
- DE 9306255 U1
- WO 2006055785 A
- EP 0193479 B1
- EP 0672776 A
- DE 19925588
- EP 1057605 A
- US 6890476 B
- US 20070202762 A1
- US 20060252334 A
- EP 1705269 A